# EUROPEAN PATENT SPECIFICATION

(11) **EP 2 009 813 B1**
(45) Date of publication and mention of the grant of the patent: **02.05.2012**
(21) Application number: 07252608.0
(22) Date of filing: 27.06.2007
(51) Int. Cl.: H04L 1/06, H04B 7/08, H04L 27/38

(54) **Wireless communication receiver with diversity combining and re-training and method thereof**
Drahtloser Kommunikationsempfänger mit Diversitätskombination und Neuausbildung sowie Verfahren dafür
Récepteur de communication sans fil avec plusieurs combinaisons et reformations, et procédé associé

(43) Date of publication of application: 31.12.2008
(60) Divisional application: 11188829.3
(73) Proprietor: ITE Tech. Inc, Hsinchu (TW)
(72) Inventor: Fu, Po-Wei, Banciao City, Taipei County 200 (TW)
(74) Representative: Chamberlain, Alan James

(56) References cited:
- EP-A- 1 301 003
- EP-A- 1 408 625
- GB-A- 2 338 149

## Description

### BACKGROUND OF THE INVENTION

### Field of the Invention

The present invention relates to a diversity communication receiver. More particularly, the present invention relates to a wireless communication receiver with diversity combining and retraining.

### Description of Related Art

In a wireless communication system, diversity reception is an effective technique for improving the performance of a receiver. It makes use of the concept that the probability of simultaneously deep signal fading on two or more diversity branches is small when the statistic properties of these branches are uncorrelated. As the number of diversity branches increases, the output of the combiner becomes more robust. This technique is especially useful in mobile wireless communication environments, where the signal quality can be highly degraded and time-varying due to Doppler fading effect and frequency-selective fading effect.

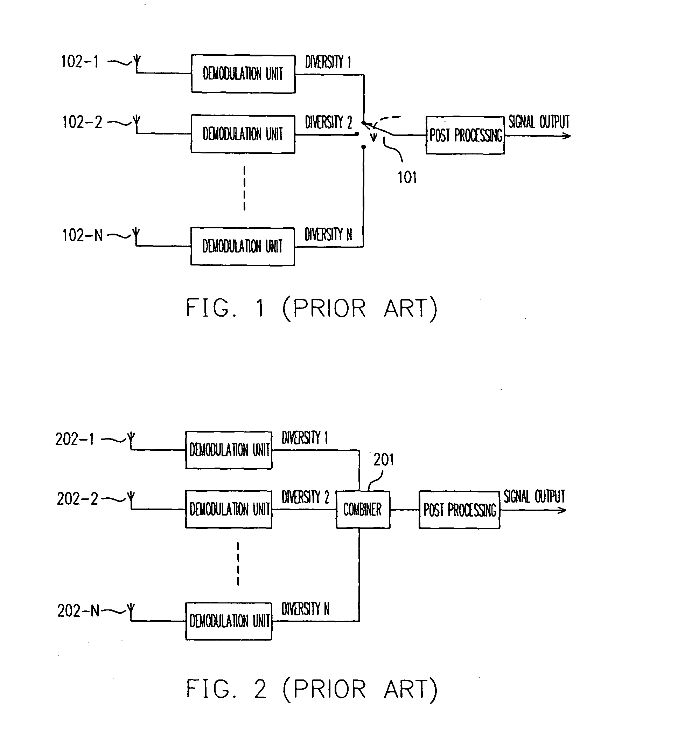

In practice, space diversity is commonly applied in wireless systems, where two or more antennas are deployed in the receiver to receive signals carrying identical information. Selection Diversity and Diversity Combining are two widely adopted methods for processing the received signals. For example, N (N is an integer greater than 1) diversity branches are employed. FIG. 1 is a block diagram illustrating the Selection Diversity. Referring to FIG. 1, Selection Diversity selects the best signal from the diversity signals received from the antennas 102-1, 102-2... 102-N by controlling the switch of the selector 101. FIG. 2 is a block diagram illustrating Diversity Combining. Referring to FIG. 2, Diversity Combining combines all diversity signals (diversity 1~diversity N) with different weightings according to the signal qualities from the antennas 202-1~202-N by using the combiner 201. Theoretically, Diversity Combining can achieve better performance than Selection Diversity since the information provided by every signal replicas is used in Diversity Combining. The information of every diversity branch contributes to performance improvement.

However, actually, the signal quality from each diversity branch can be unacceptable in practice due to poor demodulation performance, poor signal quality, or any other improper behaviour of the demodulator. Thus, such invalid signals cannot provide helpful information to the receiver, or even destroy the signal combination. Accordingly, it is very important to maintain the quality of each diversity source in a system adopting Diversity Combining.

A wireless communication apparatus is disclosed in U.S. Patent No. US2004253955. This apparatus includes a primary radio frequency (RF) branch and a diversity branch, where the performance and the power consumption are balanced by enabling or disabling the diversity branch. The wireless communication receiver in this disclosure decides whether to enable the diversity branch to improve performance by using some decision-making criterions. However, the primary RF branch is not mentioned about diversity reception control and the validities of every particular branch is not considered.

A selective Diversity Combining system is disclosed in U.S. Patent No. US6128355. Interference rejection combining (IRC) and maximum ratio combining (MRC) are adopted selectively by the system. It is decided whether to select IRC to improve signal quality when a highly interfered signal is received according to the result of the interference detector. However, the signal validity of each diversity branch is not checked, and this method becomes non-effective if the reason of poor signal quality is not due to merely interference.

A method and a system of selecting diversity branches are disclosed in U.S. Patent No. US2002090948. According to this conventional technique, the diversity gains of two diversity groups are estimated, so as to decide which one of the two diversity groups is selected. Whether the maximal diversity gain of each diversity group is reached cannot be confirmed even though the diversity group having better diversity gain can be selected.

A diversity reception system is disclosed in U.S. Patent No. US5065411. According to this conventional technique, a training signal is adopted for estimating the channel characteristics of each diversity path from transmitter to antenna, and then one of the diversity branches is selected for demodulation. According to this method, only one diversity branch is selected instead of combining more diversity branches, and in addition the criterion of selecting diversity branch does not consider the demodulation performance at each diversity branch.

Document EP1408625 discloses a diversity receiver and a diversity receiving method for receiving an OFDM signal. The diversity receiver comprises a plurality of branches each with a demodulator with AGC (Automatic Gain Control). For each branch, the AGC adjusts the gain of the tuner of the demodulator depending on the output of said demodulator, i.e. the AGC increases the gain of the tuner in case of small received power and decreases the gain of the tuner in case of large received power. The diversity RX also comprises a selecting/combining section that functions according to a reliability value determined for the plurality of branches, i.e. either selects a carrier with high reliability value or performs weighting combining in accordance with the reliability value.

### SUMMARY OF THE INVENTION

Accordingly, the present invention is directed to provide a wireless communication receiver using diversity combining, wherein the maximal diversity gain is maintained by a distributed mechanism. Thus, neither complex information exchange between various diversity branches nor centralized control or monitoring is required in the present invention. Signals of poor qualities from various diversity branches can be recovered quickly without disrupting the output of the combiner.

According to another aspect of the present invention, a wireless communication receiver using selection diversity is provided, wherein neither complex information exchange between various diversity branches nor centralized control or monitoring is required. Thus, signals of poor qualities from various diversity branches can be recovered quickly, so that diversity output selection can be provided without disrupting the output of the selector.

According to yet another aspect of the present invention, a diversity combining and re-training method of wireless communication receiver is provided, wherein the maximal diversity gain is maintained by a distributed mechanism, so that each diversity branch can detect diversity signal quality by itself and re-adjust the demodulation parameters (i.e. retrain) according to the detection result. Accordingly, neither complex information exchange between various diversity branches nor centralized control or monitoring is required in the present invention, so that signals of poor qualities from various diversity branches can be recovered quickly, without disrupting the output of the combiner.

Based on aforementioned and other objectives, the present invention provides a wireless communication receiver including a plurality of diversity branches and a combiner. Each of the diversity branches includes an antenna, a demodulation unit, and a retrain decision maker. The demodulation unit is electrically connected to the antenna. The demodulation unit demodulates the signal received by the antenna to output a diversity signal. The retrain decision maker is electrically connected to the demodulation unit for deciding whether to perform retraining in which the demodulation unit is controlled to re-adjust the demodulation parameters according to the quality of the diversity signal output by the demodulation unit. The combiner combines the diversity signals output by the demodulation units of the diversitie branches so as to output a final diversity signal.

The present invention further provides a wireless communication receiver including a plurality of diversity branches and a selector. Each of the diversities includes an antenna, a demodulation unit, and a retrain decision maker. The demodulation unit is electrically connected to the antenna. The demodulation unit demodulates the signal received by the antenna to output a diversity signal. The retrain decision maker is electrically connected to the demodulation unit for deciding whether to perform retraining in which the demodulation unit is controlled to re-adjust the demodulation parameters according to the diversity signal output by the demodulation unit. The selector selects one of the diversity signals output by the demodulation units in the diversity branches and outputs the selected diversity signal as a final diversity signal.

According to another aspect of the present invention, a diversity combining and re-training method of wireless communication receiver is provided. Wherein the wireless communication receiver includes a plurality of diversity branches. The method of training and retraining includes following steps. First, each diversity branch individually demodulates the received signal and obtains a diversity signal. Then each diversity branch individually decides whether to perform retraining in which the demodulation parameters are re-adjusted according to the quality of the demodulated diversity signal thereof. Next, the diversity signals obtained by the diversitie branches are combined to output the final diversity signal.

According to the present invention, the maximal diversity gain is maintained by a distributed mechanism, thus no complex information exchange between various diversity branches or centralized control or monitoring is required. Each diversity branch can self-monitor signal quality and retrain itself timely so that signals of poor qualities can be recovered instantly without disrupting the output of the combiner.

In order to make the aforementioned and other objects, features and advantages of the present invention comprehensible, a preferred embodiment accompanied with figures is described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram illustrating Selection Diversity.

FIG. 2 is a block diagram illustrating Diversity Combining.

FIG. 3 is a block diagram of a wireless communication receiver according to an embodiment of the present invention.

FIG. 4 is a diagram of a retrain decision maker according to an embodiment of the present invention.

FIG. 5 is a block diagram of a wireless communication receiver using selection diversity according to an embodiment of the present invention.

FIG. 6A illustrates the conventional procedure of diversity controlling.

FIG. 6B illustrates the procedure of diversity controlling according to an embodiment of the present invention.

### DESCRIPTION OF EMBODIMENTS

In communication receivers using diversity reception, signals are received by a plurality of diversity branches. In conventional technique, diversity combining is controlled by monitoring signal quality or performance at the stage next to the combiner. When the quality of the final diversity signal output by the combiner is not acceptable to post processing, the entire wireless communication receiver is forced to retrain itself (including making each demodulation unit to re-adjust the demodulation parameters thereof). The wireless communication receiver cannot provide normal outputs temporarily during the re-training of the entire wireless communication receiver. Since all the diversity branches are forced to retrain at the same time regardless of whether some diversity branches still can provide signals of good quality, the conventional technique is less efficient, and unnecessary re-training consumes extra power. Moreover, signals from some diversity branches may be combined improperly or incorrectly due to poor channel quality, improper parameter adjustments, error in calculation, changes of transmission parameters and so on. Such situations cannot be detected in conventional technology.

To maximize diversity combining gain, each diversity branch should have a comparable signal to noise ratio (SNR), and the reception behaviours between the diversity branches should be as uncorrelated as possible. In addition, signal qualities of some diversity branches may become unacceptable in the situation of poor channel quality, improper parameter adjustments, error in calculation, changes of transmission parameters, etc. In the present invention, the maximal diversity gain is maintained by a distributed mechanism, thus no complex information exchange between various diversity branches or centralized control and monitoring is required in the present invention. Each diversity branch can monitor its own signal quality and carry out re-training timely, and the signals of poor qualities of various diversity branches can be recovered instantly without disrupting the output of the combiner.

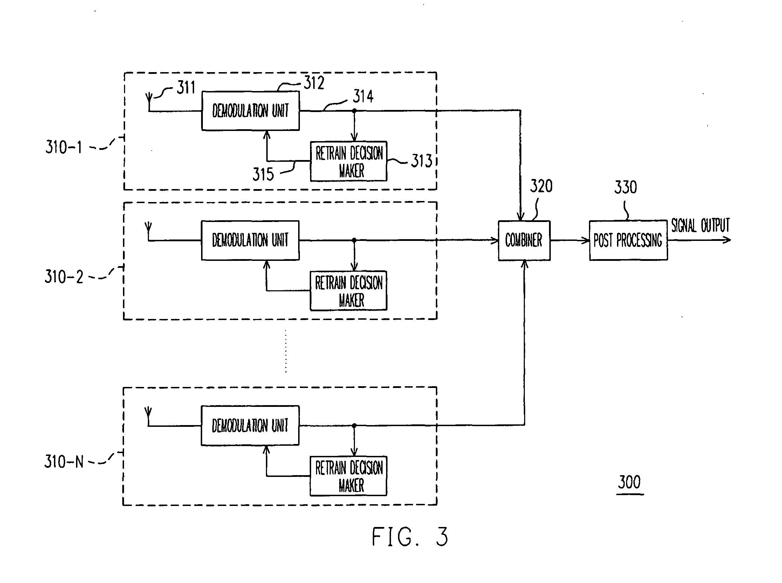

FIG. 3 is a block diagram of a wireless communication receiver 300 according to an embodiment of the present invention. Referring to FIG. 3, in the present embodiment, the implementations of the diversity branches 310-1~310-N could be all the same, thus, the implementations thereof will be described below with the diversity branch 310-1 as example. The diversity branch 310-1 includes an antenna 311, a demodulation unit 312, and a retrain decision maker 313. Here only the demodulation unit 312 is used to represent various necessary implementation means such as analog front-end processing, synchronization, or demodulation. The demodulation unit 312 demodulates the signal received by the antenna 311 to output a diversity signal to the combiner 320. The combiner 320 combines the diversity signals output by the diversity branches 310-1~310-N with different weightings according to a suitable criterion such as the maximum ratio combining (MRC) which has been used widely. Generally, the combiner 320 decides the corresponding weighting according to the signal quality of each diversity branch. The final diversity signal output by the combiner 320 is provided to the post processor 330.

The retrain decision maker 313 is electrically connected to the demodulation unit 312. The retrain decision maker 313 decides whether to control the demodulation unit 312 to re-adjust the demodulation parameters (i.e. carry out re-training) by the signal 315 according to the diversity signal 314 output by the demodulation unit 312. The implementation method of the retrain decision maker will be described below with a DVB-T receiver (which is an OFDM system) as example.

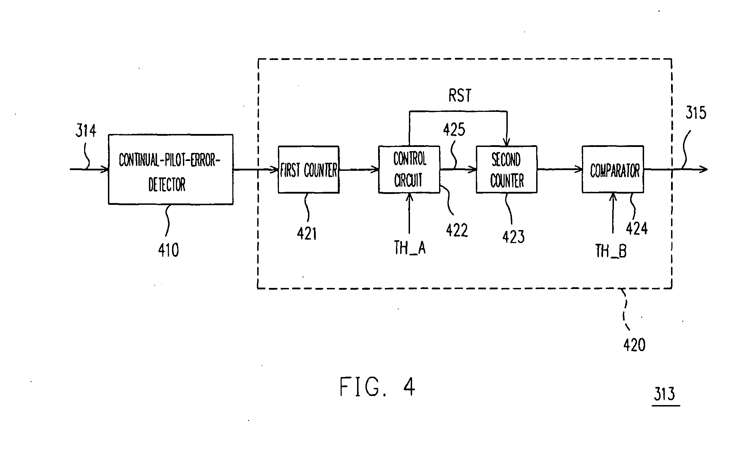

FIG. 4 is a diagram of a retrain decision maker 313 according to an embodiment of the present invention. Referring to FIG. 4, in the present embodiment, the retrain decision maker 313 includes a continual-pilot-error-detector (CPED) 410 and a double-threshold-decision-maker (DTDM) 420. The pilot detection can be executed in frequency domain, where the signal is transformed from time domain to frequency domain through fast Fourier transform (FFT). Pilot error rate (PER) is used as the indicator of signal quality of the demodulation unit. CPED 410 carries out pilot detection for diversity signal 314, which is, detecting the errors of continuous pilot errors and output the detection result.

The DTDM 420 statistically counts the detection result of the CPED 410 so as to decide whether to control the corresponding demodulation unit 312 to re-adjust the demodulation parameters. The DTDM 420 includes a first counter 421, a second counter 423, a control circuit 422, and a comparator 424. The first counter 421 counts the detection results output by the CPED 410 (i.e. the number of pilot errors of the diversity signal 314). Because the DVB-T system transmits continual pilots with boosted power in tones of fixed positions, the PER can be used reliably to indicate whether the signal output of the demodulation unit 312 is poor. The control circuit 422 compares the counting result of the first counter 421 and the first threshold TH_A, and decides whether to output a reset signal RST and an event signal 425 according to the comparison result. If within a symbol, the number of pilot errors counted by the first counter 421 reaches the first threshold TH_A, the control circuit 422 outputs the event signal 425 to the second counter 423, otherwise the control circuit 422 outputs the reset signal RST.

The second counter 423 counts the occurrences of event signal 425 and outputs the statistical result until the control circuit 422 outputs a reset signal RST to reset the statistical result. The comparator compares statistical result of the second counter 423 and the second threshold TH_B, and decides whether to control the corresponding demodulation unit 312 to re-adjust the demodulation parameters according to the comparison result. When the statistical result of the second counter 423 reaches the second threshold TH_B, the comparator controls the demodulation unit 312 to re-adjust the demodulation parameters (i.e. carry out re-training) through the output signal 315. Wherein the first threshold TH_A and the second threshold TH_B are adjustable according to system features and signal characteristics. The double-threshold-decision-making process described above can prevent unnecessary re-training of a diversity branch when the signal suffers from merely short-term fading.

In the embodiment described above, a distributed control and re-training mechanism is provided to communication receivers using diversity combining. The quality of each diversity branch is monitored individually and each diversity branch can retrain itself without interacting or exchanging information with other diversity branches. The behaviour of each diversity branch won't disrupt the output of the combiner, and each diversity branch can automatically recover from abnormity. Thus, maximal diversity combining gain can be maintained.

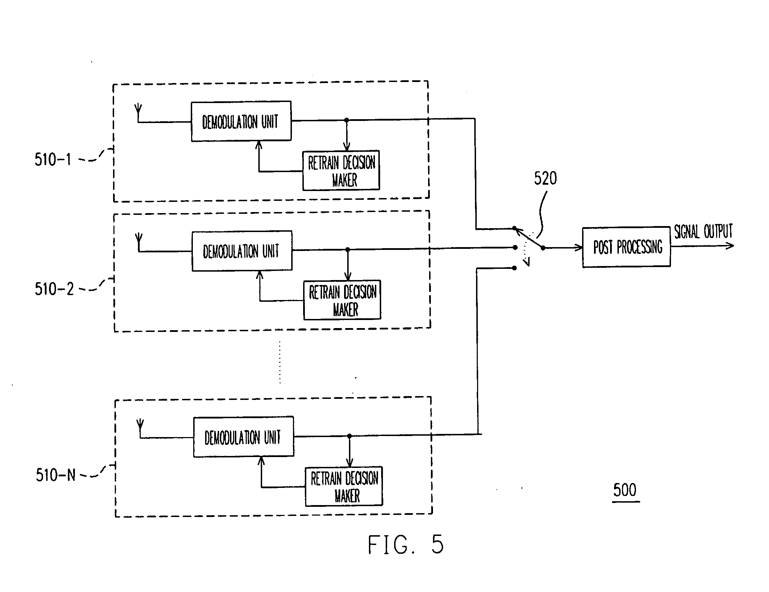

FIG. 5 is a block diagram of a wireless communication receiver using selection diversity according to an embodiment of the present invention. Referring to FIG. 5, the wireless communication receiver 500 is similar to the wireless communication receiver 300 in the embodiment described above therefore the similar part thereof will not be described herein. The difference of the wireless communication receiver 500 from the wireless communication receiver 300 is that the selector 520 is electrically connected to the diversity branches 510-1~510-N. The selector 520 selects one of the diversity signals output by the diversity branches 510-1~510-N according to the qualities of the diversity signals, and outputs the selected diversity signal as the final diversity signal.

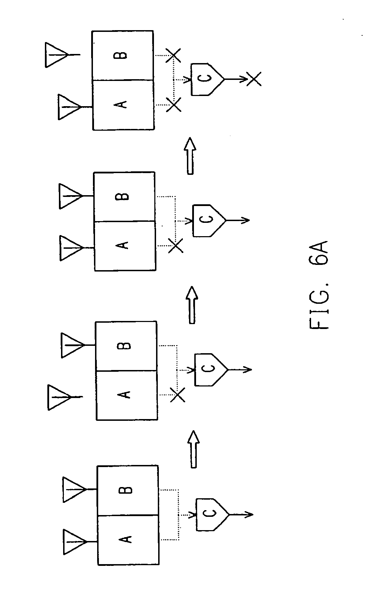

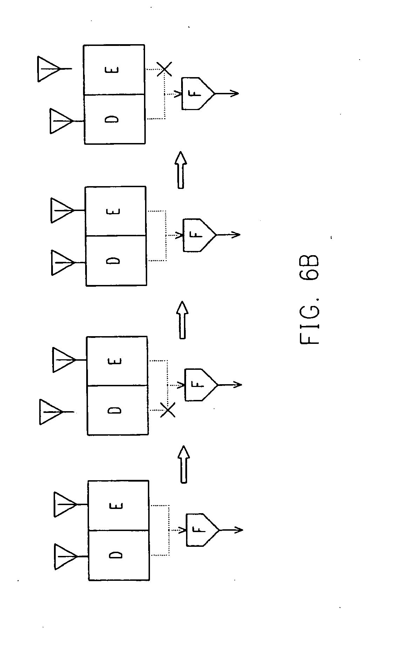

FIG. 6A illustrates the conventional procedure of diversity controlling. FIG. 6B illustrates the procedure of diversity controlling according to an embodiment of the present invention. Referring to FIG. 6A and FIG. 6B together, it is assumed that any one of the conventional diversity branches A and B can provide sufficient signal quality to meet the output requirement of the combiner C. In the same condition, it is assumed that any one of the diversity branches D and E in an embodiment of the present invention can also provide sufficient signal quality to meet the output requirement of the combiner F. The situation that the antennas of the diversity branches A and D are removed accidentally is considered. Generally, the input signal is so weak that the operation of the diversity branch A (diversity branch D) fails. However, the combiners C and F can still output the final diversity signals of acceptable quality.

If the wireless communication receiver in FIG. 6A performs quality monitoring at the post end of the combiner C as convention, when the antenna of the diversity branch A is installed again, the diversity branch A still cannot output a valid signal since the diversity branch A does not re-adjust the demodulation parameters (i.e. carry out re-training). If the antenna of the diversity branch B is then removed (or the signal received by the diversity branch B suddenly becomes poor or operation error occurs inside the diversity branch B), the output quality of the combiner C will become unacceptable. Here the wireless communication receiver of conventional technique has to perform at least once entire re-training until at least one diversity branch can output valid diversity signal. During the period that the entire wireless communication receiver is performing re-training, the wireless communication receiver cannot output valid signals temporarily.

Referring to FIG. 6B, the wireless communication receiver performs quality monitoring inside the diversity branches D and E individually and carries out partial re-training according to the self-monitoring result. After the antenna of the diversity branches D is removed, the diversity branch D re-adjusts the demodulation parameters thereof (i.e. carries out re-training) so as to try to recover the output of valid diversity signals again. The diversity branch D completes re-training instantly when the antenna of the diversity branch D is installed again. Here the diversity gain of the wireless communication receiver in FIG. 6B recovers accordingly, and the output quality of the combiner F is also improved. Even though reception error occurs in diversity branch D or E, the diversity branch wherein error occurs still can carry out re-training quickly. If the antenna of the diversity branch E is then removed (or the signal received by the diversity branch E suddenly becomes poor or operation error occurs in diversity branch E), the output quality of the combiner F can still be maintained at an acceptable level so that valid output of the combiner will not be interrupted.

In overview, in the present invention, the maximal diversity gain is maintained by a distributed mechanism, thus, each diversity branch can monitor signal quality by itself and carry out re-training timely so that no complex information exchange between diversity branches or centralized control or monitoring is required. Accordingly, in the present invention, each diversity branch can recover a signal from poor-quality quickly without disrupting the output of the combiner.

It will be apparent to those skilled in the art that various modifications and variations can be made to the structure of the present invention without departing from the scope of the invention as defined by the appended claims. In view of the foregoing, it is intended that the present invention cover modifications and variations of this invention provided they fall within the scope of the following claims.

## Claims

1. A wireless communication receiver (300), comprising:
a plurality of diversity branches (310), wherein each of the diversity branches comprises:
an antenna (311), receiving/transmitting a signal;
a demodulation unit (312), electrically connected to the antenna, wherein the demodulation unit demodulates the signal received by the antenna to output a diversity signal; and
a retrain decision maker (313), electrically connected to the demodulation unit, deciding whether to perform retraining in which the demodulation unit (312) is controlled to re-adjust the demodulation parameters according to the quality of the diversity signal output by the demodulation unit; and
a combiner (320), electrically connected to the diversity branches, combining the diversity signals output by the demodulation units in the diversity branches to output a final diversity signal.

2. The wireless communication receiver as claimed in claim 1, wherein the retrain decision maker comprises:
a continual-pilot-error-detector (CPED), performing pilot detection to a diversity signal, outputting a detection result; and
a double-threshold-decision-maker (DTDM), electrically connected to the CPED, counting the detection result of the CPED, deciding whether to control the corresponding demodulation unit to re-adjust the demodulation parameters.

3. The wireless communication receiver as claimed in claim 2, wherein the DTDM comprises:
a first counter, electrically connected to the CPED, counting errors in the detection result;
a control circuit, electrically connected to the first counter, comparing the counting result of the first counter and a first threshold, deciding whether to output a reset signal and an event signal according to the comparison result;
a second counter, electrically connected to the control circuit, counting occurrences of the event signal, outputting the statistical result, resetting the statistical result according to the reset signal; and
a comparator, electrically connected to the second counter and the corresponding demodulation unit, comparing the statistical result of the second counter and a second threshold, deciding whether to control the corresponding demodulation unit to re-adjust the demodulation parameters according to the comparison result.

4. The wireless communication receiver as claimed in claim 3, wherein the first threshold and the second threshold are adjusted according to system features and signal characteristics.

5. The wireless communication receiver as claimed in claim 1, wherein the combiner decides the weightings of the diversity signals output by the demodulation units in the diversity branches according to the qualities of the diversity signals, and combines the diversity signals according to the decided weightings so as to output the final diversity signal.

6. A wireless communication receiver (500), comprising:
a plurality of diversity branches (510), wherein each of the diversity branches comprises:
an antenna, receiving/transmitting a signal;
a demodulation unit, electrically connected to the antenna, wherein the demodulation unit demodulates the signal received by the antenna to output a diversity signal; and
a retrain decision maker, electrically connected to the demodulation unit, deciding whether to perform retraining in which the demodulation unit is controlled to re-adjust the demodulation parameters according to the quality of the diversity signal output by the demodulation unit; and
a selector (520), electrically connected to the diversity branches, selecting one of the diversity signals output by the demodulation units in the diversity branches, outputting the selected diversity signal as a final diversity signal.

7. The wireless communication receiver as claimed in claim 6, wherein the retrain decision maker comprises:
a CPED, performing pilot detection to a diversity signal, outputting a detection result; and
a DTDM, electrically connected to the CPED, counting the detection result of the CPED, deciding whether to control the corresponding demodulation unit to re-adjust the demodulation parameters.

8. The wireless communication receiver as claimed in claim 7, wherein the DTDM comprises:
a first counter, electrically connected to the CPED, counting errors in the detection result;
a control circuit, electrically connected to the first counter, comparing the counting result of the first counter and a first threshold, deciding whether to output a reset signal and an event signal according to the comparison result;
a second counter, electrically connected to the control circuit, counting occurrences of the event signal, outputting the statistical result, resetting the statistical result according to the reset signal; and
a comparator, electrically connected to the second counter and the corresponding demodulation unit, comparing the statistical result of the second counter and a second threshold, deciding whether to control the corresponding demodulation unit to re-adjust the demodulation parameters according to the comparison result.

9. The wireless communication receiver as claimed in claim 8, wherein the first threshold and the second threshold are adjusted according to system features and signal characteristics.

10. The wireless communication receiver as claimed in claim 6, wherein the selector selects one of the diversity signals output by the demodulation units in the diversity branches according to the qualities of the diversity signals, so as to output the final diversity signal.

11. A diversity combining and re-training method of a wireless communication receiver, wherein the wireless communication receiver comprises a plurality of diversity branches, and the method comprises:
each diversity branch individually demodulating a received signal and providing a diversity signal;
each diversity branch individually deciding whether to perform retraining in which the demodulation parameters are re-adjusted according to the quality of the demodulated diversity signal; and
combining the diversity signals obtained by the diversity branches to output a final diversity signal.

12. The diversity combining and re-training method as claimed in claim 11, wherein the step of each diversity branch individually deciding whether to re-adjust the demodulation parameters comprises:
each diversity branch individually performing pilot detection to the demodulated signal to obtain a detection result; and
each diversity branch individually counting the detection result to decide whether to re-adjust the demodulation parameters.

13. The diversity combining and re-training method as claimed in claim 12, wherein the step of each diversity branch individually counting the detection result comprises:
counting the number of errors of the detection result to obtain a counting result;
comparing the counting result and a first threshold to obtain a first comparison result;
deciding a reset signal and an event signal according to the first comparison result;
counting occurrences of the event signal to obtain a statistical result;
resetting the statistical result according to the reset signal;
comparing the statistical result and a second threshold to obtain a second comparison result; and
each diversity branch individually deciding whether to re-adjust the demodulation parameters according to the second comparison result.

14. The diversity combining and re-training method as claimed in claim 13, wherein the first threshold and the second threshold are adjusted according to system features and signal characteristics.

15. The diversity combining and re-training method as claimed in claim 11, wherein the step of combining the diversity signals obtained by the diversity branches comprises:
respectively deciding different weightings of the diversity branches according to the qualities of the diversity signals obtained by the diversity branches; and
combining the diversity signals according to the decided weightings to output the final diversity signal.

## Patentansprüche

1. Drahtloser Kommunikationsempfänger (300), umfassend:
mehrere Diversitätszweige (310), wobei jeder der Diversitätszweige umfasst:
eine Antenne (311), die ein Signal empfängt/überträgt;
eine Demodulationseinheit (312), die elektrisch mit der Antenne verbunden ist, wobei die Demodulationseinheit das Signal demoduliert, das von der Antenne empfangen wird, um ein Diversitätssignal auszugeben; und
eine Einrichtung (313) zum Entscheiden über ein erneutes Training, die elektrisch mit der Demodulationseinheit verbunden ist, und entscheidet, ob ein erneutes Training durchgeführt werden soll, in welchem die Demodulationseinheit (312) gesteuert wird, um die Demodulationsparameter gemäß der Qualität des Diversitätssignals anzupassen, das durch die Demodulationseinheit ausgegeben wurde; und
eine Kombiniereinrichtung (320), die elektrisch mit den Diversitätszweigen verbunden ist, und die die Diversitätssignale kombiniert, die durch die Demodulationseinheiten in den Diversitätszweigen ausgegeben werden, um ein endgültiges Diversitätssignal auszugeben.

2. Drahtloser Kommunikationsempfänger gemäß Anspruch 1, wobei die Einrichtung zum Entscheiden über ein erneutes Training umfasst:
einen kontinuierlicher Pilotfehlerdetektor (CPED), der eine Piloterfassung zu einem Diversitätssignal durchführt, und der ein Erfassungsergebnis ausgibt; und
eine Doppelschwellenwertentscheidungseinrichtung (DTDM), die elektrisch mit dem CPED verbunden ist, und die das Erfassungsergebnis des CPED zählt, und die entscheidet, ob die entsprechende Demodulationseinheit gesteuert werden soll, um die Demodulationsparameter anzupassen.

3. Drahtloser Kommunikationsempfänger gemäß Anspruch 2, wobei die DTDM umfasst:
einen ersten Zähler, der elektrisch mit der CPED verbunden ist, und der Fehler in dem Erfassungsergebnis zählt;
einen Steuerungsschaltkreis, der elektrisch mit dem ersten Zähler verbunden ist, und der das Zählergebnis des ersten Zählers und einen ersten Schwellenwert vergleicht, und der gemäß dem Vergleichsergebnis entscheidet, ob ein Zurücksetzsignal und ein Ereignissignal ausgegeben werden sollen;
einen zweiten Zähler, der elektrisch mit dem Steuerungsschaltkreis verbunden ist, und der Vorkommnisse des Ereignissignals zählt, und der ein statistisches Ergebnis ausgibt, und der das statistische Ergebnis gemäß dem Zurücksetzsignal zurücksetzt; und
einen Komparator, der elektrisch mit dem zweiten Zähler und der entsprechenden Demodulationseinheit verbunden ist, und der das statistische Ergebnis des zweiten Zählers und einen zweiten Schwellenwert vergleicht, und der gemäß dem Vergleichsergebnis entscheidet, ob die entsprechende Demodulationseinheit gesteuert werden soll die Demodulationsparameter anzupassen.

4. Drahtloser Kommunikationsempfänger gemäß Anspruch 3, wobei der erste Schwellenwert und der zweite Schwellenwert gemäß Systemmerkmalen und Signaleigenschaften angepasst werden.

5. Drahtloser Kommunikationsempfänger gemäß Anspruch 1, wobei die Kombiniereimichtung über die Gewichtungen der Diversitätssignale entscheidet, die durch die Demodulationseinheiten in den Diversitätszweigen ausgegeben wurden, gemäß der Qualitäten der Diversitätssignale, und der die Diversitätssignale gemäß den entschiedenen Gewichtungen kombiniert, um das endgültige Diversitätssignal auszugeben.

6. Drahtloser Kommunikationsempfänger (500), umfassend:
mehrere Diversitätszweige (510), wobei jeder der Diversitätszweige umfasst:
eine Antenne, die ein Signal empfängt/überträgt;
eine Demodulationseinheit, die elektrisch mit der Antenne verbunden ist, wobei die Demodulationseinheit das Signal demoduliert, das von der Antenne empfangen wird, um ein Diversitätssignal auszugeben; und
eine Einrichtung zum Entscheiden über ein erneutes Training, die elektrisch mit der Demodulationseinheit verbunden ist, und entscheidet, ob ein erneutes Training durchgeführt werden soll, in welchem die Demodulationseinheit gesteuert wird, die Demodulationsparameter gemäß der Qualität des Diversitätssignals anzupassen, das durch die Demodulationseinheit ausgegeben wurde; und
eine Auswahleinrichtung (520), die elektrisch mit den Diversitätszweigen verbunden ist, und die eines der Diversitätssignale auswählt, die durch die Demodulationseinheiten in den Diversitätszweigen ausgegeben werden, und der das ausgewählte Diversitätssignal als ein endgültiges Diversitätssignal ausgibt.

7. Drahtloser Kommunikationsempfänger gemäß Anspruch 6, wobei die Einrichtung zum Entscheiden über ein erneutes Training umfasst:
einen CPED, der eine Piloterfassung zu einem Diversitätssignal durchführt, und der ein Erfassungsergebnis ausgibt; und
eine DTDM, die elektrisch mit dem CPED verbunden ist, und die das Erfassungsergebnis des CPED zählt, und die entscheidet, ob die entsprechende Demodulationseinheit gesteuert werden soll, um die Demodulationsparameter anzupassen.

8. Drahtloser Kommunikationsempfänger gemäß Anspruch 7, wobei die DTDM umfasst:
einen ersten Zähler, der elektrisch mit dem CPED verbunden ist, und der Fehler in dem Erfassungsergebnis zählt;
einen Steuerungsschaltkreis, der elektrisch mit dem ersten Zähler verbunden ist, und der das Zählergebnis des ersten Zählers und einen ersten Schwellenwert vergleicht, und der gemäß dem Vergleichsergebnis entscheidet, ob ein Zurücksetzsignal und ein Ereignissignal ausgegeben werden sollen;
einen zweiten Zähler, der elektrisch mit dem Steuerungsschaltkreis verbunden ist, und der Vorkommnisse des Ereignissignals zählt, und der ein statistisches Ergebnis ausgibt, und der das statistische Ergebnis gemäß dem Zurücksetzsignal zurücksetzt; und
einen Komparator, der elektrisch mit dem zweiten Zähler und der entsprechenden Demodulationseinheit verbunden ist, und der das statistische Ergebnis des zweiten Zählers und einen zweiten Schwellenwert vergleicht, und der gemäß dem Vergleichsergebnis entscheidet, ob die entsprechende Demodulationseinheit gesteuert werden soll die Demodulationsparameter anzupassen.

9. Drahtloser Kommunikationsempfänger gemäß Anspruch 8, wobei der erste Schwellenwert und der zweite Schwellenwert gemäß Systemmerkmalen und Signaleigenschaften angepasst werden.

10. Drahtloser Kommunikationsempfänger gemäß Anspruch 6, wobei die Auswahleinrichtung eines der Diversitätssignale auswählt, die durch die Demodulationseinheiten der Diversitätszweige ausgegeben wurden, gemäß der Qualitäten der Diversitätssignale, um das endgültiges Diversitätssignal auszugeben.

11. Verfahren eines Diversitätskombinierens und erneuten Trainings eines drahtlosen Kommunikationsempfängers, wobei der drahtlose Kommunikationsempfänger mehrere Diversitätszweige umfasst und das Verfahren umfasst:
individuelles Demodulieren eines empfangenen Signals und Bereitstellen eines Diversitätssignals durch jeden Diversitätszweig;
individuelles Entscheiden durch jeden Diversitätszweig, ob ein erneutes Training durchgeführt werden soll, in welchem die Demodulationsparameter gemäß der Qualität des demodulierten Diversitätssignals angepasst werden; und
Kombinieren der Diversitätssignale, die durch die Diversitätszweige erhalten wurden, um ein endgültiges Diversitätssignal auszugeben,

12. Verfahren eines Diversitätskombinierens und erneuten Trainings gemäß Anspruch 11, wobei der Schritt des individuellen Entscheidens durch jeden Diversitätszweig, ob die Demodulationsparameter angepasst werden sollen, umfasst:
individuelles Durchführen einer Piloterfassung zu dem demodulierten Signal durch jeden Diversitätszweig, um ein Erfassungsergebnis zu erhalten; und
individuelles Zählen des Erfassungsergebnisses durch jeden Diversitätszweig, um zu entscheiden, ob die Demodulationsparameter angepasst werden sollen.

13. Verfahren eines Diversitätskombinierens und erneuten Trainings gemäß Anspruch 12, wobei der Schritt des individuellen Zählens des Erfassungsergebnisses durch jeden Diversitätszweig umfasst:
Zählen der Anzahl der Fehler des Erfassungsergebnisses, um ein Zählergebnis zu erhalten;
Vergleichen des Zählergebnisses und eines ersten Schwellenwerts, um ein erstes Vergleichsergebnis zu erhalten;
Entscheiden über ein Zurücksetzsignal und ein Ereignissignal, gemäß dem ersten Vergleichsergebnis;
Zählen von Vorkommnissen des Ereignissignals, um ein statistisches Ergebnis zu erhalten;
Zurücksetzten des statistischen Ergebnisses, gemäß dem Zurücksetzsignal;
Vergleichen des statistischen Ergebnisses und eines zweiten Schwellenwerts, um ein zweites Vergleichsergebnis zu erhalten; und
individuelles Entscheiden durch jeden Diversitätszweig, ob die Demodulationsparameter gemäß dem zweiten Vergleichsergebnis angepasst werden sollen.

14. Verfahren eines Diversitätskombinierens und erneuten Trainings gemäß Anspruch 13, wobei der erste Schwellenwert und der zweite Schwellenwert gemäß Systemmerkmalen und Signaleigenschaften angepasst werden.

15. Verfahren eines Diversitätskombinierens und erneuten Trainings gemäß Anspruch 11, wobei der Schritt des Kombinierens der Diversitätssignale, die durch die Diversitätszweige erhalten wurde, umfasst:
jeweiliges Entscheiden über unterschiedliche Gewichtungen der Diversitätszweige, gemäß den Qualitäten der Diversitätssignale, die durch die Diversitätszweige erhalten wurden; und
Kombinieren der Diversitätssignale, gemäß den entschiedenen Gewichtungen, um das endgültige Diversitätssignal auszugeben.

## Revendications

1. Récepteur de communication sans fil (300) comprenant
une pluralité de plusieurs branches (310), dans lequel chacune des plusieurs branches comprend
une antenne (311) recevant/émettant un signal ;
une unite de demodulation (312), électriquement raccordée a l'antenne, dans lequel l'unite de demodulation démodule le signal reçu par l'antenne pour fournir plusieurs signaux , et
un fabricant de decision de reformation (313), électriquement raccorde a l'unite de demodulation, décidant s'il faut réaliser la reformation dans laquelle l'unite de demodulation (312) est commandée pour reajuster les paramètres de demodulation selon la qualité des plusieurs signaux fournis par l'unite de demodulation , et
un mélangeur (320), électriquement raccorde aux plusieurs branches, combinant les plusieurs signaux fournis par les unites de demodulation dans les plusieurs branches pour fournir plusieurs signaux finaux

2. Récepteur de communication sans fil selon la revendication 1, dans lequel le fabricant de decision de reformation comprend
un détecteur d'erreur pilote continuel (CPED), réalisant une detection pilote pour plusieurs signaux, fournissant un résultat de detection , et
un fabricant de decision de seuil double (DTDM), raccorde électriquement au CPED, comptant le résultat de detection du CPED, décidant s'il faut commander l'unite de demodulation correspondante pour reajuster les paramètres de demodulation

3. Récepteur de communication sans fil selon la revendication 2, dans lequel le DTDM comprend
un premier compteur, électriquement raccorde au CPED, comptant des erreurs dans le résultat de detection ,
un circuit de commande, électriquement raccorde au premier compteur, comparant le résultat de comptage du premier compteur et un premier seuil, décidant s'il faut fournir un signal de reinitialisation et un signal d'événement selon le résultat de comparaison,
un second compteur, électriquement raccorde au circuit de commande, comptant des occurrences du signal d'evenement, fournissant le résultat statistique, reinitialisant le résultat statistique selon le signal de reinitialisation , et
un comparateur, électriquement raccorde au second compteur et a l'unite de demodulation correspondante, comparant le résultat statistique du second compteur et un second seuil, décidant s'il faut commander l'unite de demodulation correspondante pour reajuster les paramètres de demodulation selon le résultat de comparaison

4. Récepteur de communication sans fil selon la revendication 3, dans lequel le premier seuil et le second seuil sont ajustes selon des caractéristiques de système et des caractéristiques de signal

5. Récepteur de communication sans fil selon la revendication 1, dans lequel le mélangeur decide des pondérations des plusieurs signaux fournis par les unites de demodulation dans les plusieurs branches selon les qualités des plusieurs signaux, et mélange les plusieurs signaux selon les pondérations décidées afin de fournir les plusieurs signaux finaux

6. Récepteur de communication sans fil (500), comprenant
une pluralité de plusieurs branches (510) dans lequel chacune des plusieurs branches comprend
une antenne, recevant/émettant un signal ,
une unite de demodulation, raccordée électriquement a l'antenne, dans laquelle l'unite de demodulation démodule le signal reçu par l'antenne pour fournir plusieurs signaux , et
un fabricant de decision de reformation, électriquement raccorde a l'unite de demodulation, décidant s'il faut réaliser la reformation dans laquelle l'unite de demodulation est commandée pour reajuster les paramètres de demodulation selon la qualité des plusieurs signaux fournis par l'unité de démodulation ; et
un sélecteur (520), raccorde électriquement aux plusieurs branches, sélectionnant une des plusieurs sorties fournies par les unites de demodulation dans les plusieurs branches, fournissant les plusieurs signaux sélectionnes comme des plusieurs signaux finaux

7. Récepteur de communication sans fil selon la revendication 6, dans lequel le fabricant de decision de reformation comprend
un CPED, réalisant une detection pilote pour plusieurs signaux, fournissant un résultat de detection , et
un DTDM, raccorde électriquement au CPED, comptant le résultat de detection du CPED, décidant s'il faut commander l'unite de demodulation correspondante pour reajuster les paramètres de demodulation

8. Récepteur de communication sans fil selon la revendication 7, dans lequel le DTDM comprend
un premier compteur, raccorde électriquement au CPED, comptant des erreurs dans le résultat de detection ,
un circuit de commande, raccorde électriquement au premier compteur, comparant le résultat de comptage du premier compteur et un premier seuil, décidant s'il faut fournir un signal de reinitialisation et un signal d'événement selon le résultat de comparaison,
un second compteur, raccorde électriquement au circuit de commande, comptant des occurrences du signal d'evenement, fournissant le résultat statistique, reinitialisant le résultat statistique selon le signal de reinitialisation , et
un comparateur, raccorde électriquement au second compteur et a l'unite de demodulation correspondante, comparant le résultat statistique du second compteur et un second seuil, décidant s'il faut commander l'unite de demodulation correspondante pour reajuster les paramètres de demodulation selon le résultat de comparaison

9. Récepteur de communication sans fil selon la revendication 8, dans lequel le premier seuil et le second seuil sont ajustes selon des caractéristiques de système et des caractéristiques de signal

10. Récepteur de communication sans fil selon la revendication 6, dans lequel le sélecteur sélectionne un des plusieurs signaux fournis par les unites de demodulation dans les plusieurs branches selon les qualités des plusieurs signaux, afin de fournir les plusieurs signaux finaux

11. Procédé de plusieurs combinaisons et reformations d'un récepteur de communication sans fil, dans lequel le récepteur de communication sans fil comprend une pluralité de plusieurs branches, et le procédé comprend
chaque plusieurs branches démodulant individuellement un signal reçu et fournissant plusieurs signaux,
chaque plusieurs branches décidant individuellement s'il faut réaliser la reformation dans laquelle les paramètres de demodulation sont reajustes selon la qualité des plusieurs signaux démodules , et
combinaison des plusieurs signaux obtenus par les plusieurs branches pour fournir plusieurs signaux finaux

12. Procédé de plusieurs combinaisons et de reformations selon la revendication 11, dans lequel l'étape de chaque plusieurs branches décidant individuellement s'il faut reajuster les paramètres de demodulation comprend
chaque plusieurs branches réalisant individuellement une detection pilote pour le signal démodule pour obtenir un résultat de detection , et
chaque plusieurs branches comptant individuellement le résultat de detection pour decider s'il faut reajuster les paramètres de demodulation

13. Procédé de plusieurs combinaisons et de reformations selon la revendication 12, dans lequel l'étape de chaque plusieurs branches comptant individuellement le résultat de detection comprend
le comptage du nombre d'erreurs du résultat de detection pour obtenir un résultat de comptage ,
la comparaison du résultat de comptage et un premier seuil pour obtenir un premier résultat de comparaison ,
la decision d'un signal de reinitialisation et d'un signal d'événement selon le premier résultat de comparaison ,
le comptage des occurrences du signal d'evenement pour obtenir un résultat statistique ,
la reinitialisation du résultat statistique selon le signal reinitialise ,
la comparaison du résultat statistique et d'un second seuil pour obtenir un résultat de comparaison , et
chaque plusieurs branches décidant individuellement s'il faut reajuster les paramètres de demodulation selon le second résultat de comparaison

14. Procédé de plusieurs combinaisons et de reformations selon la revendication 13, dans lequel le premier seuil et le second seuil sont reajustes selon les caractéristiques de système et les caractéristiques de signal

15. Procédé de plusieurs combinaisons et de reformations selon la revendication 11, dans lequel l'etape de combinaison des plusieurs signaux obtenus par les plusieurs branches comprend
la decision respectivement de différentes pondérations des plusieurs branches selon les qualités des plusieurs signaux obtenus par les plusieurs branches , et
la combinaison des plusieurs signaux selon les pondérations décidées pour fournir les plusieurs signaux finaux
